# EUROPEAN PATENT SPECIFICATION

(11) **EP 4 455 843 B1**
(45) Date of publication and mention of the grant of the patent: **15.07.2026**
(21) Application number: 23170849.6
(22) Date of filing: 28.04.2023
(51) Int. Cl.: G06F 3/0354, G06F 3/04883, G06F 3/046

(54) **USER BORNE DEVICE TYPE IDENTIFICATION**
BENUTZERGESTÜTZTE VORRICHTUNGSTYPIDENTIFIZIERUNG
IDENTIFICATION DE TYPE DE DISPOSITIF PORTÉ PAR L'UTILISATEUR

(43) Date of publication of application: 30.10.2024
(73) Proprietor: Advanced Magnetic Interaction, AMI, 38170 Seyssinet-Pariset (FR)
(72) Inventor: HAUTSON, Tristan, 38170 Seyssinet-Pariset (FR); ANTONAKIS, Ion-Ioannis, 14569 Anoixi (GR); PELLERANO, Vincent Thomas, 38170 Seyssinet-Pariset (FR); JOBERT, Timothée, 38170 Seyssinet-Pariset (FR); CHAVIN-COLLIN, Gireg, 38170 Seyssinet-Pariset (FR)
(74) Representative: Peterreins Schley

(56) References cited:
- US-A1- 2013 218 516
- US-A1- 2014 362 057
- US-A1- 2015 220 168
- US-A1- 2016 216 783

## Description

### TECHNICAL FIELD

The present disclosure concerns a user borne device, system, computer implemented method, and computer program element.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device does not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a 3D position of the writing device may be determined.

A user-operation of the user-borne device within a sensing volume created by the plurality of magnetometers may be represented on an output device (e.g., a screen) to a user. More specifically, a movement of the user-borne device within the sensing volume may be reproduced as a movement of a virtual object on the output device. In current applications, a visual reproduction on an output device of a location of a user-borne device within the sensing volume may be inaccurate and not reliable with respect to certain arrangements of the plurality of magnetometers and the output device. Accordingly, electronic devices comprising magnetometers can be further improved.
Document US20160216783A1 discloses a system and method may include a device including a user interface, a detector, and a central processing unit (CPU) in communication with the detector. Document US20140362057A1 discloses A system for plotting a mark drawn on a writing medium, comprising a tool including a first and a second permanent magnet. The first permanent magnet is mechanically linked to a tip. Document US20130218516A1 discloses A coordinate sensing system including a magnetic member, a direction sensor, a first magnetic sensor and a processor, wherein the processor communicates with the direction sensor and is electrically connected to the first magnetic sensor. Document US20150220168A1 discloses techniques and apparatus or obtaining user input via a stylus configured to serve as an interface for providing user input into a computing device.

### SUMMARY

The system is as defined in claim 1. The computer implemented method for identifying a user borne device is as defined in claim 10, and the computer program is ad defined in claim 14.

According to a first aspect, there is provided a system for identifying a user borne device comprising:
- a digital device comprising an interaction surface and a plurality of magnetometers;
- a user borne device operable on the interaction surface;
- the user borne device comprising:
   - a first magnetically responsive component disposed at, or near to, a proximal end of an elongate body of the user-borne device; and
   - a second magnetically responsive component disposed along at least a portion of the longitudinal axis of the user borne device in-between the first magnetically responsive component and a distal end of the elongate body;
   - wherein the second magnetically responsive component is configured to move translationally with respect to the first magnetically responsive component and/or to move rotationally with respect to the longitudinal axis of the user borne device; and
   - wherein at least one of the first and second magnetically responsive components is a permanent magnet;
   wherein the user-borne device is configured to define a magnetic signature which is altered by the movement of the second magnetically responsive component relative to the first magnetically responsive component and wherein the plurality of magnetometers is configured to identify the magnetic signature. The magnetic signature is configured to be detectable as an identification of the user borne device and/or an identification of the type of the user borne device.

According to a second aspect, there is provided a computer implemented method for identifying a user borne device comprising:
- providing the user borne device comprising:
   - a first magnetically responsive component disposed at, or near to, a proximal end of an elongate body of the user-borne device; and
   - a second magnetically responsive component disposed along at least a portion of the longitudinal axis of the user borne device in-between the first magnetically responsive component and a distal end of the elongate body;
   - wherein the second magnetically responsive component is configured to move translationally with respect to the first magnetically responsive component and/or to move rotationally with respect to the longitudinal axis of the user borne device; and
   - wherein at least one of the first and second magnetically responsive components is a permanent magnet;
- altering a magnetic signature of the by the movement of the second magnetically responsive component relative to the first magnetically responsive component; and
- identifying the user-borne device by identifying the magnetic signature with a plurality of magnetometers of a digital device comprising an interaction surface and the plurality of magnetometers.

According to a third aspect, there is provided a computer program element comprising machine readable instructions which, when performed by processing circuitry, are configured to perform the computer implemented method according to the second aspect.

Firstly, compared to some prior art techniques, the techniques of the present disclosure can allow the user to combine the benefits of multiple user borne devices like e.g. digital writing instruments into one single device.

Secondly, compared to some prior art solutions, the present technique provides a singular physical user borne device like e.g. a writing instrument which allows selecting between a predefined list of different types of digital/virtual pens (e.g., pen, pencil, fountain pen, multicolor pen, eraser, highlighter, etc.) and/or changing their respective characteristics (e.g., variable nib sizes/thickness, different colors, etc.), by physically moving a magnetically responsive component either directly or via a mechanism.

Thirdly, compared to some prior art solutions, the present technique does not require electronic components in the user borne device to provide these functions.

Fourthly, in some examples of the present techniques, a mode of the user borne device can be detected e.g. an erase mode or a draw mode.

Fifthly, compared to some prior art solutions, the present technique allows to differentiate between multiple electrically active or electronically passive instruments even if no electronic components are present within the user borne device.

Sixthly, the identification of the user borne device can be used to provide brand recognition or user recognition e.g., multiple users with the same device can be differentiated in real time.

Some terms are used in the present specification in the following manner (see also detailed explanations further below):
In the following specification, the term "magnetically responsive component" refers to at least one of four main subclasses of magnetically responsive materials, each with distinct magnetic properties:
1. Diamagnetic materials: These materials have no net magnetic moment in the absence of an external magnetic field. When exposed to an external magnetic field, they create an induced magnetic field in the opposite direction, resulting in a weak repulsive force. Examples include copper, silver, and bismuth.
2. Paramagnetic materials: These materials also have no net magnetic moment in the absence of an external magnetic field. However, when exposed to an external magnetic field, their magnetic moments align with the field, creating an induced magnetic field in the same direction and resulting in a weak attractive force. Examples include aluminium, magnesium, and lithium.
3. Ferromagnetic materials: These materials exhibit strong magnetism due to the parallel alignment of their magnetic moments. They can retain their magnetization even after the external magnetic field is removed, which makes them suitable for permanent magnets and other applications requiring strong magnetic fields. Examples include iron, nickel, and cobalt.
4. Ferrimagnetic materials: These materials have a complex magnetic structure where magnetic moments align in parallel and antiparallel directions with unequal magnitudes, resulting in a net spontaneous magnetization. They can also retain their magnetization after the external magnetic field is removed, although their magnetism is typically weaker than that of ferromagnetic materials. Examples include magnetite (Fe3O4) and other ferrites.

Additionally, alloys and compounds containing these elements can also exhibit magnetic properties. For example, ferrites (such as iron oxide or Fe3O4) and rare-earth magnets (like neodymium-iron-boron magnets) are ferromagnetic materials commonly used in various applications. These four subclasses encompass the broad range of materials that exhibit magnetic behaviour when exposed to an external magnetic field.

In summary, magnetically responsive materials can either strengthen, weaken, or negligibly affect a static magnetic field depending on their magnetic properties. Diamagnetic materials create an opposing field, paramagnetic materials create a weakly aligned field, and ferromagnetic materials create a strongly aligned field. Ferrimagnetic materials create an aligned magnetic field, similar to ferromagnetic materials. The key difference between the two lies in the arrangement of magnetic moments within the material. Both, ferromagnetic materials and ferrimagnetic materials can be pre-magnetized in which case they exhibit magnetic fields. Without pre-magnetization ferromagnetic materials and ferrimagnetic materials do not exhibit magnetic fields.

In the following specification, the term "modifying the resulting magnetic field" refers to at least one of the following modifications to or of the resulting magnetic field generated by the user borne device:
Modify the field strength or shape,
Magnify or reduce field intensity,
Deformation of the field,
Affecting the symmetry of the field.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as nonlimiting examples. Common reference numerals on different figures indicate like or similar features.
- Fig. 1: schematically illustrates a side cut through view of a system for identifying a user borne device.
- Fig. 2: schematically illustrates a side cut through view of a user borne device.
- Fig. 3: schematically illustrates a side cut through view of a user borne device.
- Fig. 4: schematically illustrates a side cut through view of a user borne device.
- Fig. 5: schematically illustrates a side cut through view of a user borne device.
- Fig. 6: schematically illustrates a side cut through view of a user borne device.
- Fig. 7: schematically illustrates a computer implemented method for identifying a user borne device.

### DETAILED DESCRIPTION

Embodiments of the user-borne device, of the computer-implemented method for identifying a user borne device and of the system for identifying a user borne device according to the present disclosure will be described in reference to the drawings as follows.

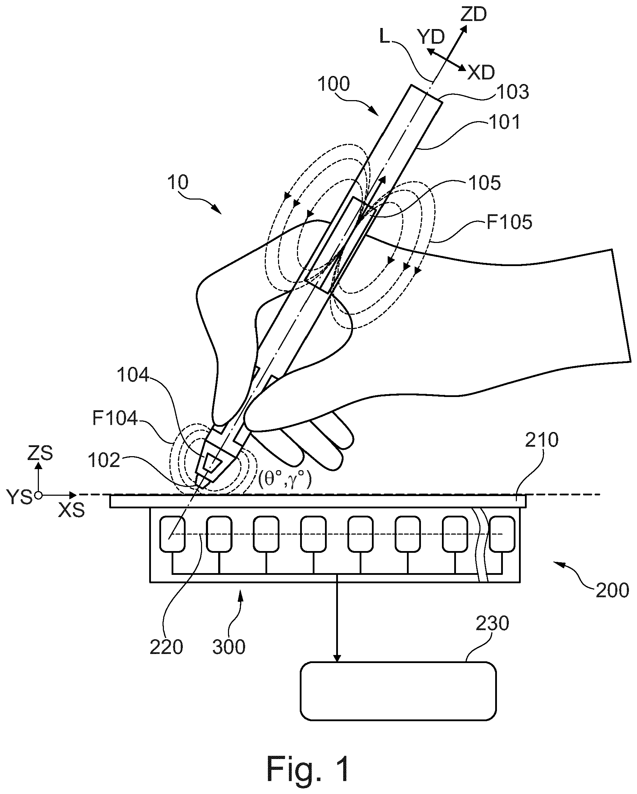

Fig. 1 is a schematic view of a system 10 for identifying a user-borne device 100 or a user bearable device according to an aspect of the present disclosure. More specifically, the system 10 may be suitable for identifying an electrically and/or electronically passive user-borne device 100. In other words, the system 10 may be suitable for identifying a type and/or characteristics of a user-borne device 100 within a sensing volume. The system 10 comprises a user-borne device 100 and a digital device 200 as for example an electronic interactive display. The user-borne device 100 is operable on an interaction surface 210 of the digital device 200.

The digital device 200 illustrated in Fig. 1 is a tablet computer intended to be used with the user borne device 100. The user-borne device 100 may, for example, be a computer mouse, a dial, a ring, a toy, a keyboard, a joystick or a stylus. A stylus-type user borne device 100 is illustrated in Fig. 1.

The user borne device 100 comprises an elongate body 101 defining a longitudinal axis L of the user borne device 100. The elongate body 101 or the user borne device 100 comprises a proximal end 102 and a distal end 103. A first magnetically responsive component 104 is immovably disposed at, or near to, the proximal end 102 of the elongate body 101. A second magnetically responsive component 105 is disposed along at least a portion of the longitudinal axis L of the user borne device 100 in-between the first magnetically responsive component 104 and the distal end 103 of the elongate body 101. The second magnetically responsive component 105 is configured to move translationally with respect to the first magnetically responsive component 104 and/or to move rotationally with respect to the longitudinal axis L of the user borne device 100. At least one of the first and second magnetically responsive components 104, 105 is a permanent magnet. The first and second magnetically responsive components 104, 105 each comprise at least one of a diamagnetic material, a paramagnetic material, a ferromagnetic material, a ferrimagnetic material, and a permanent magnetic material. The second magnetically responsive component 105 can, in examples, have a different polarity, or magnetic moment vector and/or a greater magnetic field compared to the first magnetically responsive component 104.

The resulting relative motion of the magnetically responsive components modifies the resulting field generated by the user-borne device 100 (as captured by the magnetometer array 300), which in turn can be identified and correlated or corresponded to a type of a virtual writing instrument and/or corresponded to the characteristics the specific writing instrument type.

The first and second magnetically responsive components 104, 105 may have shapes including but not limited to ring, trapezoidal, spherical, cylindrical, etc.

**In** some examples, the first magnetically responsive component 104 covers or spans at least a portion of the elongate body of the user borne device 100 at the proximal end.

**In** some examples, the first magnetically responsive component 104 defines a reference for movement of the second magnetically responsive component 105. The term movement encompasses translational and/or rotational movement of the second magnetically responsive component 105. The movement of the second magnetically responsive component 105 changes a signature of the user-borne device 100.

In some examples, the user-borne device 100 is configured to define a magnetic signature which is altered by the movement of the second magnetically responsive component 105 relative to the first magnetically responsive component 104. The magnetic signature is configured to be detectable by the plurality of magnetometers 300.

The magnetic signature is configured to be detectable as an identification of the user borne device 100 and/or as an identification of the type of the user borne device 100. The types include for example: pen, pencil, fountain pen, multicolour pen, highlighter, gel pen, ball point pen, spindle, etc.

In some examples, the magnetic signature defines a position and/or an orientation of the user borne device 100. The detection precision of already existing tracking systems may be enhanced. Further, additional tracking systems may not be needed.

Movement of the second magnetically responsive component is configured to change the magnetic signature representing a first type of the user borne device 100 to a second type of the user borne device. Changing the type includes actually changing the device type or its identification. It further includes changing their resulting effect on the "virtual" paper of the interaction surface 210 of the digital device 200. This may include providing at least one of a substantially different line, effect, drawing, color, opacity, transparency, intensity compared to the other type.

In some examples, the type of the user borne device 100 comprises at least one of a writing instrument and an eraser. Types of a writing instrument may include pen, pencil, fountain pen, multicolour pen, highlighter, gel pen, ball point pen, brush, spindle, etc. As mentioned above, this may include changing their resulting effect on the "virtual" paper of the interaction surface 210 of the digital device 200. This may include providing at least one of a substantially different line, effect, drawing compared to the other type.

In some examples, movement of the second magnetically responsive component 105 is configured to modify the magnetic signature representing a characteristic of the user borne device 100. The characteristic may include at least one of nib size, line thickness, and colour.

The plurality of magnetometers 300 may be fixedly arranged in a casing of the digital device 10. The plurality of magnetometers 300 define a fixed position and/or orientation with respect to each other. A magnetometer plane 220 may be defined by a plane that extends through a majority of the plurality of magnetometers 300. More specifically, the magnetometer plane 220 may extend through centres, more specifically geometric centres, of a majority of the plurality of magnetometers 300. In other words, most of the magnetometers of the plurality of magnetometers 300 may be arranged in a common plane, i.e., the magnetometer plane 220. However, one or more magnetometers of the plurality of magnetometers 300 may be distanced and/or inclined with respect to the common plane, e.g., due to manufacturing issues and/or tolerances and/or manufacturing design constraints. The magnetometer plane 220 may additionally or alternatively be defined by a plane in which the magnetometers of the plurality of magnetometers 300 are predominantly arranged.

As indicated in Fig. 1, the digital device 10 may comprise a reference coordinate system XS, YS, ZS comprising a first reference axis XS, a second reference axis YS and a vertical reference axis ZS. The first reference axis XS and the second reference axis YS may be defined parallel to the magnetometer plane 220 and may be orthogonal to each other. The vertical reference axis ZS may be orthogonal to the magnetometer plane 220. Furthermore, the vertical reference axis ZS may extend through a centre of the plurality of magnetometers 300.

In Fig. 1, an arrangement of the plurality of magnetometers 300 with respect to the interaction surface 210 of the digital device 200 is shown. As outlined above, the plurality of magnetometers 300 is configured to measure a magnetic field associated with the at least first and second magnetically responsive components 104, 105 of the user borne device 100.

The digital device 200 may include a processing circuitry 230 configured to determine magnetic field measurement data based on the collected magnetic field measurements within the sensing volume relative to the reference coordinate system XS, YS, ZS. Magnetic field measurement data may be indicative of a magnetic object position, a magnetic object orientation and/or a magnetic object strength associated with the at least first and second magnetically responsive components 104, 105 relative to the reference coordinate system XYZ, more specifically to the magnetometer plane 220. Further, the magnetic field measurement data is indicative for an identification of the user borne device 100 and/or an identification of the type of the user borne device 100. To that end, the plurality of magnetometers 300 detects a magnetic signature of the user borne device 100 which can be changed or modified by movement of the second magnetically responsive component 105. This magnetic signature is included in the magnetic field measurement data and can detected or extracted by the processing circuitry 230. Then, the processing circuitry 230 identifies the user borne device 100, its type and/or characteristics and correspondingly adapts the interaction between the user borne device 100 and the interaction surface 210 of the digital device 200.

This processing can be performed, for example, by the processing circuitry 230. In embodiments, a separate coprocessor can perform the processing and provide the respective data and results as an input to the processing circuitry 230.

The magnetic object orientation may be defined by a set of magnetic object orientation angles (θ, γ) relative to axes of the reference coordinate system. More specifically, respective magnetic object orientation angles (θ, γ) may be measured between a magnetic moment vector of the at least first and second magnetically responsive components 104, 105 and the respective axes XS, YS, ZS of the reference coordinate system.

As outlined above, each magnetometer of the plurality of magnetometers 300 may be configured to measure a magnetic field F104, F105 in the direction of the first reference axis XS, the second reference axis YS, and/or the vertical reference axis ZS. In other words, each magnetometer of the plurality of magnetometers 300 may be configured to perform magnetic field measurements in the direction of two axes (i.e., two dimensions XS, YS) to obtain basic bitmap representations of writing or sketching on the interaction surface 210, or three axes (i.e., three dimensions XS, YS, ZS) to obtain pressure and/or grayscale representations of writing or sketching on the interaction surface 210. The magnetic field is induced on the plurality of magnetometers 300 by the magnetically responsive component(s) or the user-borne device. From that magnetic field a location of the magnetically responsive component(s) or the user-borne device can be computed from the magnetic measurement data. Knowing the position and orientation of the user borne device, the drawing generated on the screen can be computed. Bitmap representations of writing or sketching on the interaction surface 210 can be obtained. Pressure information can be used to change the opacity, thickness or more generally the texture of rendering. The number of magnetometers provided may depend on the size of the interaction surface 210, on which the user-borne device 100 is operated.

The digital device 200 may comprise electronics as a central processing unit, computational electronics, optional electronics for a display and/or a battery, etc. The digital device 200 may comprise the array of magnetometers 300 as well as an optional pressure sensing FSR (force sensor resistor) matrix. The FSR matrix may enable the digital device 200 to determine the existence of a contact point and/or the pressure applied by the user-borne device 100 and hence determine the distance of the user-borne device's nib and the at least one movable magnet. The additional information could be used to improve the granularity of the system i.e., increase the number of magnetic field modifications that could be identified.

In embodiments the first magnetically responsive component 104 in the proximal end can generate a lower intensity magnetic field relative to the second magnetically responsive component 105, such that in the event that a magneto-responsive electrophoretic display is used it is not affected by the intensity of the second magnetically responsive component 105.

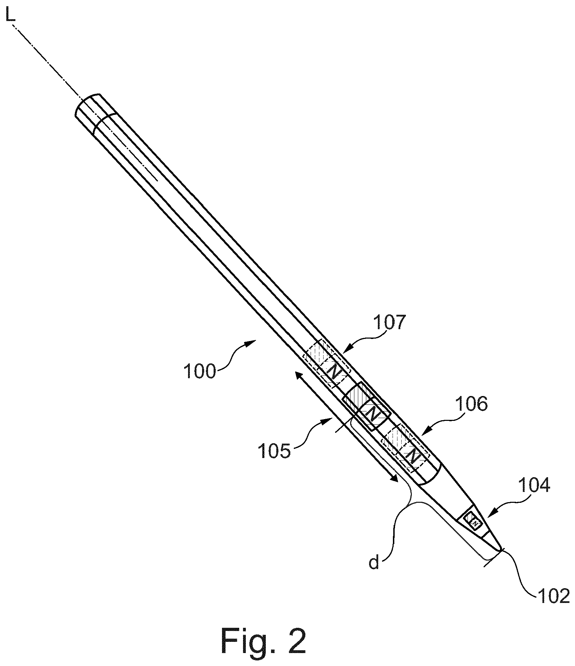

Fig. 2 schematically illustrates a side cut through view of a user borne device 100. Here, the user borne device 100 has a physical shape of a pen. The type or function of the user borne device 100 i.e. its effect on the interaction surface 210 can be modified by translational movement of the second magnetically responsive component 105.

The first magnetically responsive component 104 is fixedly arranged at the proximal end 102 and the second magnetically responsive component 105 is movably arranged at a distance d along the longitudinal axis L from the first magnetically responsive component 104.

The first and the second magnetically responsive components 104, 105 can be permanent magnets as depicted. In other configurations, the first magnetically responsive component 104 can comprise or consist of non-permanent magnetic material.

In some examples, the first magnetically responsive component 104 defines a reference for movement of the second magnetically responsive component 105. The reference may be magnetic or defined by the distance between the first magnetically responsive component 104 and the second magnetically responsive component 105.

In some examples, the second magnetically responsive component 105 is substantially aligned with the longitudinal axis L of the user borne device 100.

In some examples, the second magnetically responsive component 105 is located at a distance d from the proximal end 102 or the pen nib. The distance d is less than the half of a longitudinal dimension of the elongate body of the user borne device 100.

The second magnetically responsive component 105 is depicted in an initial or start position. In some examples, the second magnetically responsive component 105 is movable between a first position 106 and a second position 107 along the longitudinal axis L of the elongate body. The first position 106 and the second position 107 may are equilaterally spaced from a middle location at the distance d. The second magnetically responsive component 105 can take or be moved into any position in-between the first position 106 and the second position 107. The second magnetically responsive component 105 can be locked of fixed at any of the intermediate positions as well as at the first position 106 or the second position 107.

In some examples, a mechanism coupled to the second magnetically responsive component 105 and configured to translationally and/or rotationally move the second magnetically responsive component 105 with respect to the first magnetically responsive component is provided. Such mechanism may include at least one of a slider, a switch, a button, a rotary sleeve or the like.

In some examples, a movement range of the second magnetically responsive component 105 ranges from 0.1 to 80 mm at each side of the location of the distance d, wherein the movement range comprises increments of 0.1 mm within this range. The movement range may be the distance between the first position 106 and the second position 107 and the second magnetically responsive component 105 may be moved in increments of 0.1 mm within this range. The movement or distinct positions of the second magnetically responsive component 105 may be detectable by the plurality of magnetometers 300 in increments of 0.1 mm. in other words, the movement of the second magnetically responsive component 105 may be segmented into steps which are detectable by a plurality of magnetometers 300.

In some examples, the second magnetically responsive component 105, or a centroid or the center of mass of the second magnetically responsive component 105, is disposed at a portion of the elongate body defined in a second magnetically responsive component mounting range along the longitudinal axis, wherein the second magnetically responsive component mounting range is defined as being between 0.1 and 0.2, or between 0.2 and 0.3, or between 0.3 and 0.4, or between 0.4 and 0.5, or between 0.5 and 0.6, or between 0.6 and 0.7, or between 0.7 and 0.8, or between 0.8 and 0.9, or between 0.9 and 0.99, of the total length of the elongate body, as measured from the proximal end.

In some examples, the first and/or second magnetically responsive components 104, 105 have a total length in one of the ranges between 0.01 and 0,02, or between 0.02 and 0.03, or between 0.03 and 0.04, or between 0.04 and 0.05, or between 0.05 and 0.06, or between 0.06 and 0.07, or between 0.07 and 0.08, or between 0.08 and 0.09, or between 0.1 and 0.2, or between 0.2 and 0.3, or between 0.3 and 0.4, or between 0.4 and 0.5, or between 0.5 and 0.6, or between 0.6 and 0.7, or between 0.7 and 0.8, or between 0.8 and 0.9, of the total length of the elongate body.

In some examples, the first and/or second magnetically responsive components 104, 105 have a diameter or thickness perpendicular to the elongate body in one of the ranges of 0.5-1.0mm, 1.0 - 1.5mm, 1.5mm-2.0mm, 2.0mm-2.25mm, 2.25mm-2.5mm, 2.5mm-2.75mm, 2.75mm-3.0mm, 3.0mm - 3.5mm, 3.5mm-4.0mm, 4.0-4.5mm, 4.5-5.0mm, 5.0-5.5mm, 5.5-6.0mm, 6.0-6.5mm, 6.5-7.0mm, 7.0-7.5mm, 7.5-8.0mm, 8.0-8.5mm, 8.5-9.0mm, 9.0-9.5mm, 9.5-10.0mm, 10mm..

**In** some examples, the total distance of the elongate body between the proximal end and the distal end is greater than 20mm, 25mm, 30mm, 35mm, 40mm, 45mm, 50mm, 55mm, 60mm, 65mm, 70mm, 75mm, 80mm, 85mm, 90mm, 95mm, 100mm, 105mm, 110mm, 115mm, 120mm, 125mm, 130mm, 135mm, 140mm, 145mm, 150mm, 155mm, 160mm, 165mm, 170mm, 175mm, 180mm, 185mm, 190mm, 195mm, or 200mm.

**In** some examples, the first magnetically responsive component 104 has a magnetic moment in one of the following ranges: 0.001 - 0.002 Am2, 0.002 - 0.003 Am2, 0.003 - 0.004 Am2, 0.0035 - 0.0045 Am2, 0.003 - 0.005 Am2, 0.005 - 0.006 Am2, 0.006 - 0.007 Am2, 0.007 - 0.008 Am2, 0.008 - 0.009 Am2, or 0.009 - 0.01 Am2, 0.01 - 0.02 Am2, 0.02-0.03 Am2, 0.03-0.04 Am2, 0.04-0.05 Am2, 0.05-0.06 Am2, 0.06-0.07 Am2, 0.07-0.08 Am2, 0.08-0.09 Am2, or 0.1 Am2. The magnetic moment of the first magnetically responsive component 104 may be even 0.0001 Am2, less than 0.0001 Am2 or between 0.0001 and 0.001 Am2. This holds especially true for distances between the first magnetically responsive component 104 and the interaction surface 210 of one millimeter or less.

**In** some examples, the first magnetically responsive component 104 comprises a lower than the second magnetically responsive component 105. The magnetic moment of the first magnetically responsive component 104 may be lower by a factor of between 2 and 40. As an example, the first magnetically responsive component 104 may have a magnetic moment of 0,004 Am2, while the second magnetically responsive component 105 may have a magnetic moment of 0,18 Am2.

In some examples, the second magnetically responsive component 105 has a magnetic moment in one of the following ranges: less than 0.1 Am2, or between 0.1 - 0.3 Am2, 0.3 - 0.6 Am2, 0.6 - 0.9 Am2, 0.9 - 1.2 Am2, 1.2 - 1.5 Am2, 1.5 - 1.8 Am2, 1.8 - 2.1 Am2, 2.1 - 2.4 Am2, 2.4 - 2.7 Am2, 2.7 - 3.0 Am2, 3.0 - 3.3 Am2, 3.3 - 3.6 Am2, 3.6 - 3.9 Am2, 3.9 - 4.2 Am2, 4.2 - 4.5 Am2, 4.5 - 4.8 Am2, 4.8 - 5.1 Am2, 5.1 - 5.4 Am2, 5.4 - 5.7 Am2, 5.7 - 6.0 Am2, 6.0 - 6.3 Am2, 6.3 - 6.6 Am2, 6.6 - 6.9 Am2, 6.9 - 7.2 Am2, 7.2 - 7.5 Am2, 7.5 - 7.8 Am2, 7.8 - 8.1 Am2, 8.1 - 8.4 Am2, 8.4 - 8.7 Am2, 8.7 - 9.0 Am2, 9.0 - 9.3 Am2, 9.3 - 9.6 Am2, 9.6 - 9.9 Am2.

In some examples, the second magnetically responsive component 105 comprises two to six, or four, sub-components, wherein each sub-component comprises a magnetically responsive portion and wherein each sub-component is distinctively movable with respect to the first magnetically responsive component 104. The sub-components may have various shapes including but not limited to ring, trapezoidal, spherical, cylindrical, etc. The magnetically responsive portions of the sub-components may be arranged at different positions along the longitudinal axis L of the user borne device 100. The magnetically responsive portions of the sub-components may comprise the same material and the same distance from the first magnetically responsive component 104 along the longitudinal axis L of the user borne device 100 but comprise different magnetic intensities. In the event that one, some or all each sub-components are activated or pressed, the resulting magnetic field is substantially different from each other or the default state.

In some examples, a magnetization orientation of the first magnetically responsive component 104 along the longitudinal axis L of the user borne device 100 is substantially opposite to the magnetization orientation of the second magnetically responsive component 105 along the longitudinal axis L of the user borne device 100.

In some examples, a magnetization orientation of the second magnetically responsive component 105 along the longitudinal axis L of the user borne device 100 is substantially aligned along, or parallel to, the longitudinal axis L of the user borne device 100.

In some examples, the user borne device 100 further comprises further magnetically responsive components disposed along the longitudinal axis L of the user borne device 100 between the second magnetically responsive component 105 and the distal end of the elongate body.

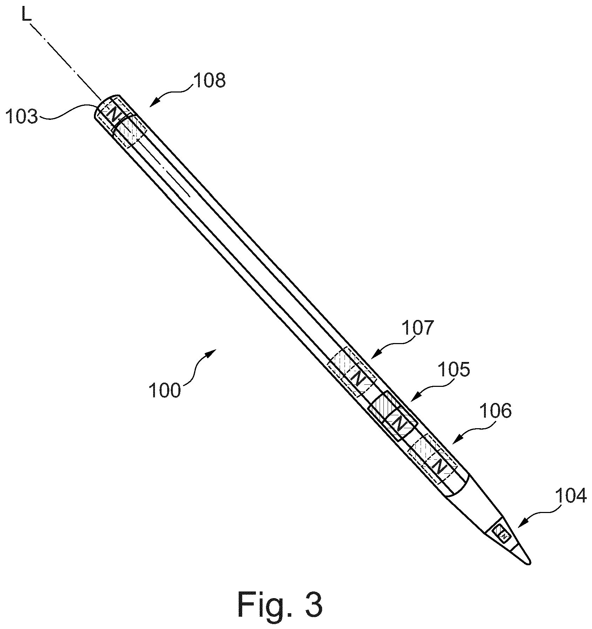

Fig. 3 schematically illustrates a side cut through view of a user borne device 100. Here, the user borne device 100 has a physical shape of a pen. The type or function of the user borne device 100 i.e. its effect on the interaction surface 210 can be modified by translational movement of the second magnetically responsive component 105. The user borne device 100 further includes a third magnetically responsive component 108 which is disposed at the distal end 103 of the elongate body. The function and the properties of the first magnetically responsive component 104 can be identical to the ones of Fig. 2. The function, the properties, and the movement of the second magnetically responsive component 105 can be identical to the ones of Fig. 2.

In some examples, at least two of the first, second and third magnetically responsive components 104, 105, 108 are permanent magnets.

In some examples, at least two of the first, second and third magnetically responsive components 104, 105, 108 are ferromagnetic and one of the first, second and third magnetically responsive components 104, 105, 108 is a permanent magnet.

For example, all three magnetically responsive components 104, 105, 108 are a permanent magnet. In another example, the first and the second magnetically responsive components 104, 105 are a permanent magnet. In another example, the second and the third magnetically responsive components 105, 108 are a permanent magnet. In another example, only the second magnetically responsive component 105 is a permanent magnet.

In some examples, the second magnetically responsive component 105 is disposed closer to the first magnetically responsive component 104 than to the third magnetically responsive component 108 along the longitudinal axis L of the user borne device 100 as this may improve accuracy. In cases where the second magnetically responsive component 105 which is arranged in the middle is a permanent magnet, it may be located closer to an end of the user borne device 100 where no permanent magnet is located.

In some examples, the second magnetically responsive component 105 is disposed closer to the third magnetically responsive component 108 than to the first magnetically responsive component 104 along the longitudinal axis L of the user borne device 100.

In some examples, the third magnetically responsive component 108 has the opposite polarity to the first magnetically responsive component 104.

In some examples, the third magnetically responsive component 108 has the same polarity as the first magnetically responsive component 104.

In some examples, the third magnetically responsive component 108 is a striped pole magnet having a magnetization orientation that is aligned along a plane that is substantially perpendicular to the longitudinal axis L of the user borne device 100.

In some examples, the third magnetically responsive component 108 has a greater magnetic moment relative to the first and second magnetically responsive components 104, 105.

In some examples, the third magnetically responsive component 108 has a magnetic moment similar to the first magnetically responsive component 104.

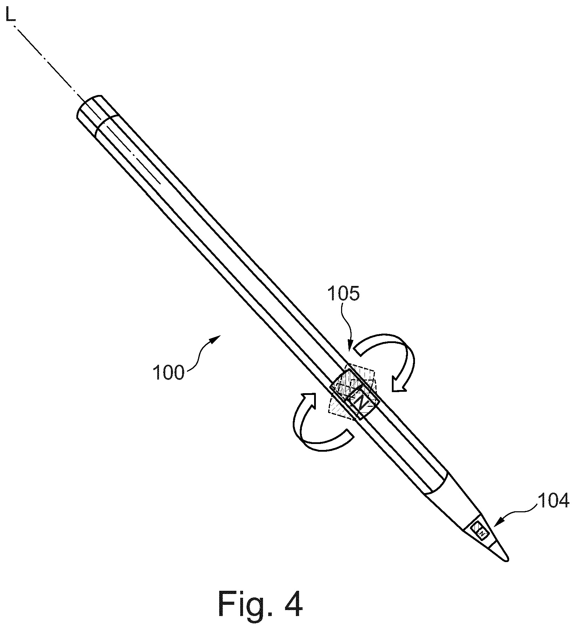

Fig. 4 schematically illustrates a side cut through view of a user borne device 100. Here, the user borne device 100 has a physical shape of a pen. The type or function of the user borne device 100 i.e. its effect on the interaction surface 210 can be modified by rotational movement of the second magnetically responsive component 105. The function and the properties of the first magnetically responsive component 104 can be identical to the ones of Fig. 2.

In contrast to Fig. 2, the second magnetically responsive component 105 can be moved rotationally with respect to a rotational axis being orthogonal to the longitudinal axis L of the user borne device 100. The rotational axis is not the magnetization axis in order to make the movement detectable. The movement of the second magnetically responsive component 105 encompasses the rotational movement as depicted in Fig. 4 and the translational movement as depicted in Figs. 2 and 3.

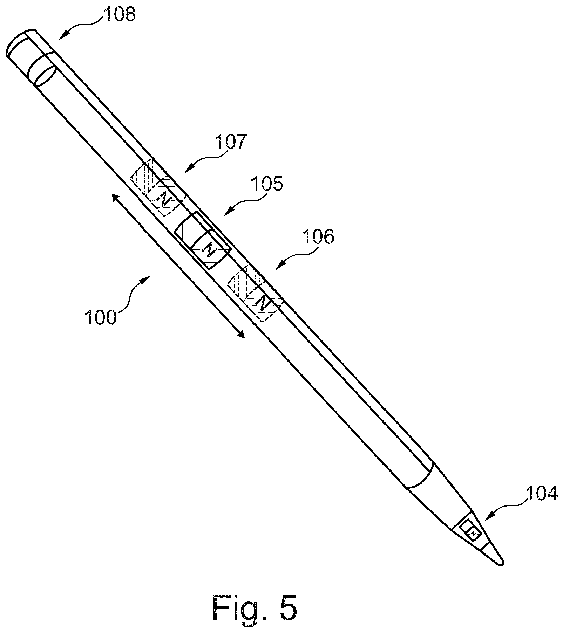

Fig. 5 schematically illustrates a side cut through view of a user borne device 100. Here, the user borne device 100 has a physical shape of a pen. The type or function of the user borne device 100 i.e. its effect on the interaction surface 210 can be modified by translational movement of the second magnetically responsive component 105. The user borne device 100 further includes a third magnetically responsive component 108 which is disposed at the distal end 103 of the elongate body. The third magnetically responsive component 108 comprises or consists of non-permanent magnetic material.

The function and the properties of the first magnetically responsive component 104 can be identical to the ones of Fig. 2. The function, the properties, and the movement of the second magnetically responsive component 105 can be identical to the ones of Fig. 2. In comparison to Fig. 3 the second magnetically responsive component 105 is positioned further away from the first magnetically responsive component 104 along the longitudinal axis L of the user borne device 100. This configuration may reduce irritations at interaction surfaces 210 of digital devices 200.

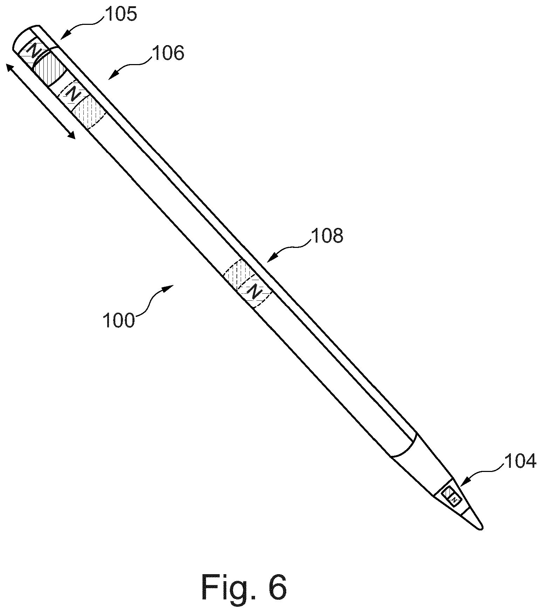

Fig. 6 schematically illustrates a side cut through view of a user borne device 100. Here, the user borne device 100 has a physical shape of a pen. The type or function of the user borne device 100 i.e. its effect on the interaction surface 210 can be modified by translational movement of the second magnetically responsive component 105 which is here disposed at the distal end 103 of the elongate body. The user borne device 100 further includes a third magnetically responsive component 108 which is disposed in between the first and the second magnetically responsive components 104, 105 along the longitudinal axis L of the user borne device 100.

The second magnetically responsive component 105 is movable in a translational and/or rotational manner. The second magnetically responsive component 105 may move in one direction towards the first magnetically responsive component 104 so that two distinct positions or in addition all possible intermediate positions can be taken by the second magnetically responsive component 105.

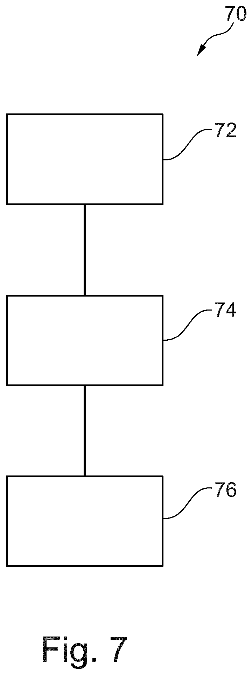

Fig. 7 schematically illustrates a computer implemented method 70 for operating an electronic interactive display.

There is provided a computer implemented method 70 for identifying a user borne device 100 comprising:
- providing 72 the user borne device comprising:
   - a first magnetically responsive component disposed at, or near to, a proximal end of an elongate body of the user-borne device; and
   - a second magnetically responsive component disposed along at least a portion of the longitudinal axis of the user borne device in-between the first magnetically responsive component and a distal end of the elongate body;
   - wherein the second magnetically responsive component is configured to move translationally with respect to the first magnetically responsive component and/or to move rotationally with respect to the longitudinal axis of the user borne device; and
- wherein at least one of the first and second magnetically responsive components is a permanent magnet;
- altering 74 a magnetic signature of the by the movement of the second magnetically responsive component relative to the first magnetically responsive component; and
- identifying 76 the user-borne device by identifying the magnetic signature with the plurality of magnetometers.

In an embodiment, the method further comprises detecting a position and/or orientation of the user borne device 100 by the magnetic signature.

In an embodiment, the magnetometer of the plurality of magnetometers which closest to the first magnetically responsive component is removed or not used for detection and/or calculation. In this way the first magnetically responsive component has no impact on the measurement data and could thus be neglected. This may aid to avoid the utilization of the data of the closest magnetometer which might be saturated.

In the preceding specification, numerous specific details are set forth in order to provide a thorough understanding. It will be apparent, however, to one having ordinary skill in the art that the specific detail need not be employed to practice the present disclosure. In other instances, well-known materials or methods have not been described in detail in order to avoid obscuring the present disclosure.

Reference throughout the preceding specification to "one embodiment", "an embodiment", "one example" or "an example", "one aspect" or "an aspect" means that a particular feature, structure or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example.

Furthermore, the particular features, structures, or characteristics may be combined in any suitable combinations and / or sub-combinations in one or more embodiments or examples. Where relevant, dimensions in millimetres in this application are cited to the nearest +- 0.01mm unless otherwise stated.

## Claims

1. A system (10) for identifying a user borne device (100) comprising:
- a digital device (200) comprising an interaction surface (210) and a plurality of magnetometers (300);
- a user borne device (100) operable on the interaction surface (210);
- the user borne device (100) comprising:
- a first magnetically responsive component (104) disposed at, or near to, a proximal end (102) of an elongate body (101) of the user-borne device (100); and
- a second magnetically responsive component (105) disposed along at least a portion of the longitudinal axis (L) of the user borne device (100) in-between the first magnetically responsive component (104) and a distal end (103) of the elongate body (101);
- wherein the second magnetically responsive component (105) is configured to move translationally with respect to the first magnetically responsive component (104) and/or to move rotationally with respect to the longitudinal axis (L) of the user borne device (100); and
- wherein at least one of the first and second magnetically responsive components (104, 105) is a permanent magnet;
- wherein the user-borne device (100) is configured to define a magnetic signature which is altered by the movement of the second magnetically responsive component (105) relative to the first magnetically responsive component (104) and wherein the plurality of magnetometers (300) is configured to identify the magnetic signature; and
- wherein the magnetic signature is configured to be detectable as an identification of the user borne device (100) and/or an identification of the type of the user borne device (100).

2. The system (10) according to claim 1,
wherein movement of the second magnetically responsive component (105) is configured to change the magnetic signature representing a first type of the user borne device (100) to a second type of the user borne device (100) and/or wherein movement of the second magnetically responsive component (105) is configured to modify the magnetic signature representing a characteristic of the user borne device (100).

3. The system (10) according to one of the previous claims,
wherein the second magnetically responsive component (105) is substantially aligned with the longitudinal axis (L) of the user borne device (100).

4. The system (10) according to one of the previous claims,
wherein the second magnetically responsive component (105) is movable between a first and a second position (107) along the longitudinal axis (L) of the elongate body (101).

5. The system (10) according to one of the previous claims,
wherein the first magnetically responsive component (104) comprises a lower magnetic moment than the second magnetically responsive component (105).

6. The system (10) according to one of the previous claims, further comprising:
a mechanism coupled to the second magnetically responsive component (105) and configured to translationally and/or rotationally move the second magnetically responsive component (105) with respect to the first magnetically responsive component (104).

7. The system (10) according to one of the previous claims,
wherein movement of the second magnetically responsive component (105) is segmented into steps which are detectable by the plurality of magnetometers (300).

8. The system (10) according to one of the previous claims,
wherein a magnetization orientation of the second magnetically responsive component (105) along the longitudinal axis (L) of the user borne device (100) is substantially aligned along, or parallel to, the longitudinal axis (L) of the user borne device (100).

9. The system (10) according to one of the previous claims,
wherein a magnetization orientation of the first magnetically responsive component (104) along the longitudinal axis (L) of the user borne device (100) is substantially opposite to the magnetization orientation of the second magnetically responsive component (105) along the longitudinal axis (L) of the user borne device (100).

10. A computer implemented method (70) for identifying a user borne device (100) comprising:
- providing (72) the user borne device (100) comprising:
- a first magnetically responsive component (104) disposed at, or near to, a proximal end (102) of an elongate body (101) of the user-borne device (100); and
- a second magnetically responsive component (105) disposed along at least a portion of the longitudinal axis (L) of the user borne device (100) in-between the first magnetically responsive component (104) and a distal end (103) of the elongate body (101);
- wherein the second magnetically responsive component (105) is configured to move translationally with respect to the first magnetically responsive component (104) and/or to move rotationally with respect to the longitudinal axis (L) of the user borne device (100); and
- wherein at least one of the first and second magnetically responsive components (104, 105) is a permanent magnet;
- altering (74) a magnetic signature of the user borne device (100) by the movement of the second magnetically responsive component (105) relative to the first magnetically responsive component (104); and
- identifying (76) the user-borne device (100) by identifying the magnetic signature with a plurality of magnetometers (300) of a digital device (200) comprising an interaction surface (210) and the plurality of magnetometers (300).

11. The computer implemented method (70) according to claim 10, further comprising:
- changing a first type of the user borne device (100) to a second type of the user borne device (100) by the movement of the second magnetically responsive component (105) relative to the first magnetically responsive component (104).

12. The computer implemented method (70) according to claim 10, further comprising:
- detecting a position and/or orientation of the user borne device by the magnetic signature.

13. The computer implemented method (70) according to claim 10 or 11, further comprising:
modifying a characteristic of the user borne device (100) by the movement of the second magnetically responsive component (105) relative to the first magnetically responsive component (104).

14. A computer program element comprising machine readable instructions which, when performed by processing circuitry (230), are configured to perform the computer implemented method (70) according to one of claims 10 to 13.

## Patentansprüche

1. System (10) zum Identifizieren einer von einem Benutzer getragenen Vorrichtung (100), umfassend:
- eine digitale Vorrichtung (200), umfassend eine Interaktionsoberfläche (210) und eine Vielzahl von Magnetometern (300);
- eine von einem Benutzer getragene Vorrichtung (100), die auf der Interaktionsoberfläche (210) betreibbar ist;
- die von einem Benutzer getragene Vorrichtung (100) umfassend:
- eine erste magnetisch reagierende Komponente (104), die an einem proximalen Ende (102) eines länglichen Körpers (101) der von einem Benutzer getragenen Vorrichtung (100) oder nahe diesem angeordnet ist; und
- eine zweite magnetisch reagierende Komponente (105), die entlang mindestens eines Abschnitts der Längsachse (L) der von einem Benutzer getragenen Vorrichtung (100) zwischen der ersten magnetisch reagierenden Komponente (104) und einem distalen Ende (103) des länglichen Körpers (101) angeordnet ist;
- wobei die zweite magnetisch reagierende Komponente (105) konfiguriert ist, um sich in Bezug auf die erste magnetisch reagierende Komponente (104) verschiebend zu bewegen und/oder sich in Bezug auf die Längsachse (L) der von einem Benutzer getragenen Vorrichtung (100) drehend zu bewegen; und
- wobei mindestens eine der ersten und der zweiten magnetisch reagierenden Komponente (104, 105) ein Dauermagnet ist;
- wobei die von einem Benutzer getragene Vorrichtung (100) konfiguriert ist, um eine magnetische Signatur zu definieren, die durch die Bewegung der zweiten magnetisch reagierenden Komponente (105) relativ zu der ersten magnetisch reagierenden Komponente (104) verändert wird, und wobei die Vielzahl von Magnetometern (300) konfiguriert ist, um die magnetische Signatur zu identifizieren; und
- wobei die magnetische Signatur konfiguriert ist, um als eine Identifikation der von einem Benutzer getragenen Vorrichtung (100) und/oder als eine Identifikation der Art der von einem Benutzer getragenen Vorrichtung (100) detektierbar zu sein.

2. System (10) nach Anspruch 1,
wobei eine Bewegung der zweiten magnetisch reagierenden Komponente (105) konfiguriert ist, um die magnetische Signatur, die eine erste Art der von einem Benutzer getragenen Vorrichtung (100) darstellt, zu einer zweiten Art der von einem Benutzer getragenen Vorrichtung (100) zu wechseln und/oder wobei eine Bewegung der zweiten magnetisch reagierenden Komponente (105) konfiguriert ist, um die magnetische Signatur, die eine Eigenschaft der von einem Benutzer getragenen Vorrichtung (100) darstellt, zu modifizieren.

3. System (10) nach einem der vorstehenden Ansprüche,
wobei die zweite magnetisch reagierende Komponente (105) im Wesentlichen mit der Längsachse (L) der von einem Benutzer getragenen Vorrichtung (100) ausgerichtet ist.

4. System (10) nach einem der vorstehenden Ansprüche,
wobei die zweite magnetisch reagierende Komponente (105) zwischen einer ersten und einer zweiten Position (107) entlang der Längsachse (L) des länglichen Körpers (101) bewegbar ist.

5. System (10) nach einem der vorstehenden Ansprüche,
wobei die erste magnetisch reagierende Komponente (104) ein geringeres magnetisches Moment als die zweite magnetisch reagierende Komponente (105) umfasst.

6. System (10) nach einem der vorstehenden Ansprüche, ferner umfassend:
einen Mechanismus, der an die zweite magnetisch reagierende Komponente (105) gekoppelt und konfiguriert ist, um die zweite magnetisch reagierende Komponente (105) in Bezug auf die erste magnetisch reagierende Komponente (104) verschiebend und/oder drehend zu bewegen.

7. System (10) nach einem der vorstehenden Ansprüche,
wobei die Bewegung der zweiten magnetisch reagierenden Komponente (105) in Schritte segmentiert ist, die durch die Vielzahl von Magnetometern (300) detektierbar sind.

8. System (10) nach einem der vorstehenden Ansprüche,
wobei eine Magnetisierungsorientierung der zweiten magnetisch reagierenden Komponente (105) entlang der Längsachse (L) der von einem Benutzer getragenen Vorrichtung (100) im Wesentlichen entlang der Längsachse (L) der von einem Benutzer getragenen Vorrichtung (100) ausgerichtet oder parallel zu dieser ist.

9. System (10) nach einem der vorstehenden Ansprüche,
wobei eine Magnetisierungsorientierung der ersten magnetisch reagierenden Komponente (104) entlang der Längsachse (L) der von einem Benutzer getragenen Vorrichtung (100) im Wesentlichen entgegengesetzt zu der Magnetisierungsorientierung der zweiten magnetisch reagierenden Komponente (105) entlang der Längsachse (L) der von einem Benutzer getragenen Vorrichtung (100) ist.

10. Computerimplementiertes Verfahren (70) zum Identifizieren einer von einem Benutzer getragenen Vorrichtung (100), umfassend:
- Bereitstellen (72) der von einem Benutzer getragenen Vorrichtung (100), umfassend:
- eine erste magnetisch reagierende Komponente (104), die an einem proximalen Ende (102) eines länglichen Körpers (101) der von einem Benutzer getragenen Vorrichtung (100) oder nahe diesem angeordnet ist; und
- eine zweite magnetisch reagierende Komponente (105), die entlang mindestens eines Abschnitts der Längsachse (L) der von einem Benutzer getragenen Vorrichtung (100) zwischen der ersten magnetisch reagierenden Komponente (104) und einem distalen Ende (103) des länglichen Körpers (101) angeordnet ist;
- wobei die zweite magnetisch reagierende Komponente (105) konfiguriert ist, um sich in Bezug auf die erste magnetisch reagierende Komponente (104) verschiebend zu bewegen und/oder sich in Bezug auf die Längsachse (L) der von einem Benutzer getragenen Vorrichtung (100) drehend zu bewegen; und
- wobei mindestens eine der ersten und der zweiten magnetisch reagierenden Komponente (104, 105) ein Dauermagnet ist;
- Verändern (74) einer magnetischen Signatur der von einem Benutzer getragenen Vorrichtung (100) durch die Bewegung der zweiten magnetisch reagierenden Komponente (105) relativ zu der ersten magnetisch reagierenden Komponente (104); und
- Identifizieren (76) der von einem Benutzer getragenen Vorrichtung (100) durch das Identifizieren der magnetischen Signatur mit einer Vielzahl von Magnetometern (300) einer digitalen Vorrichtung (200), umfassend eine Interaktionsoberfläche (210) und die Vielzahl von Magnetometern (300).

11. Computerimplementiertes Verfahren (70) nach Anspruch 10, ferner umfassend:
- Wechseln einer ersten Art der von einem Benutzer getragenen Vorrichtung (100) zu einer zweiten Art der von einem Benutzer getragenen Vorrichtung (100) durch die Bewegung der zweiten magnetisch reagierenden Komponente (105) relativ zu der ersten magnetisch reagierenden Komponente (104).

12. Computerimplementiertes Verfahren (70) nach Anspruch 10, ferner umfassend:
- Detektieren einer Position und/oder Orientierung der von einem Benutzer getragenen Vorrichtung durch die magnetische Signatur.

13. Computerimplementiertes Verfahren (70) nach Anspruch 10 oder 11, ferner umfassend:
Modifizieren einer Eigenschaft der von einem Benutzer getragenen Vorrichtung (100) durch die Bewegung der zweiten magnetisch reagierenden Komponente (105) relativ zu der ersten magnetisch reagierenden Komponente (104).

14. Computerprogrammelement, umfassend maschinenlesbare Anweisungen, die, wenn sie durch einen Verarbeitungsschaltkreis (230) durchgeführt werden, konfiguriert sind, um das computerimplementierte Verfahren (70) nach einem der Ansprüche 10 bis 13 durchzuführen.

## Revendications

1. Système (10) permettant d'identifier un dispositif porté par l'utilisateur (100) comprenant :
- un dispositif numérique (200) comprenant une surface d'interaction (210) et une pluralité de magnétomètres (300) ;
- un dispositif porté par l'utilisateur (100) utilisable sur la surface d'interaction (210) ;
- le dispositif porté par l'utilisateur (100) comprenant :
- un premier composant à sensibilité magnétique (104) disposé au niveau ou à proximité d'une extrémité proximale (102) d'un corps allongé (101) du dispositif porté par l'utilisateur (100) ; et
- un second composant à sensibilité magnétique (105) disposé le long d'au moins une partie de l'axe longitudinal (L) du dispositif porté par l'utilisateur (100) entre le premier composant à sensibilité magnétique (104) et une extrémité distale (103) du corps allongé (101) ;
- dans lequel le second composant à sensibilité magnétique (105) est conçu pour se déplacer en translation par rapport au premier composant à sensibilité magnétique (104) et/ou pour se déplacer en rotation par rapport à l'axe longitudinal (L) du dispositif porté par l'utilisateur (100) ; et
- dans lequel au moins l'un des premier et second composants à sensibilité magnétique (104, 105) est un aimant permanent ;
- dans lequel le dispositif porté par l'utilisateur (100) est conçu pour définir une signature magnétique qui est modifiée par le mouvement du second composant à sensibilité magnétique (105) par rapport au premier composant à sensibilité magnétique (104) et dans lequel la pluralité de magnétomètres (300) est configurée pour identifier la signature magnétique ; et
- dans lequel la signature magnétique est conçue pour être détectable en tant qu'identification du dispositif porté par l'utilisateur (100) et/ou en tant qu'identification du type du dispositif porté par l'utilisateur (100).

2. Système (10) selon la revendication 1,
dans lequel un mouvement du second composant à sensibilité magnétique (105) est conçu pour changer la signature magnétique représentant un premier type du dispositif porté par l'utilisateur (100) en un second type du dispositif porté par l'utilisateur (100) et/ou dans lequel un mouvement du second composant à sensibilité magnétique (105) est conçu pour modifier la signature magnétique représentant une caractéristique du dispositif porté par l'utilisateur (100).

3. Système (10) selon l'une des revendications précédentes,
dans lequel le second composant à sensibilité magnétique (105) est sensiblement aligné avec l'axe longitudinal (L) du dispositif porté par l'utilisateur (100).

4. Système (10) selon l'une des revendications précédentes,
dans lequel le second composant à sensibilité magnétique (105) est mobile entre une première et une seconde position (107) le long de l'axe longitudinal (L) du corps allongé (101).

5. Système (10) selon l'une des revendications précédentes,
dans lequel le premier composant à sensibilité magnétique (104) comprend un moment magnétique inférieur à celui du second composant à sensibilité magnétique (105).

6. Système (10) selon l'une des revendications précédentes, comprenant en outre :
un mécanisme accouplé au second composant à sensibilité magnétique (105) et conçu pour déplacer en translation et/ou en rotation le second composant à sensibilité magnétique (105) par rapport au premier composant à sensibilité magnétique (104).

7. Système (10) selon l'une des revendications précédentes,
dans lequel un mouvement du second composant à sensibilité magnétique (105) est segmenté en étapes qui sont détectables par la pluralité de magnétomètres (300).

8. Système (10) selon l'une des revendications précédentes,
dans lequel une orientation d'aimantation du second composant à sensibilité magnétique (105) le long de l'axe longitudinal (L) du dispositif porté par l'utilisateur (100) est sensiblement alignée le long de, ou parallèle à, l'axe longitudinal (L) du dispositif porté par l'utilisateur (100).

9. Système (10) selon l'une des revendications précédentes,
dans lequel une orientation d'aimantation du premier composant à sensibilité magnétique (104) le long de l'axe longitudinal (L) du dispositif porté par l'utilisateur (100) est sensiblement opposée à l'orientation d'aimantation du second composant à sensibilité magnétique (105) le long de l'axe longitudinal (L) du dispositif porté par l'utilisateur (100).

10. Procédé mis en œuvre par ordinateur (70) permettant d'identifier un dispositif porté par l'utilisateur (100), comprenant :
- la fourniture (72) du dispositif porté par l'utilisateur (100) comprenant :
- un premier composant à sensibilité magnétique (104) disposé au niveau ou à proximité d'une extrémité proximale (102) d'un corps allongé (101) du dispositif porté par l'utilisateur (100) ; et
- un second composant à sensibilité magnétique (105) disposé le long d'au moins une partie de l'axe longitudinal (L) du dispositif porté par l'utilisateur (100) entre le premier composant à sensibilité magnétique (104) et une extrémité distale (103) du corps allongé (101) ;
- dans lequel le second composant à sensibilité magnétique (105) est conçu pour se déplacer en translation par rapport au premier composant à sensibilité magnétique (104) et/ou pour se déplacer en rotation par rapport à l'axe longitudinal (L) du dispositif porté par l'utilisateur (100) ; et
- dans lequel au moins l'un des premier et second composants à sensibilité magnétique (104, 105) est un aimant permanent ;
- la modification (74) d'une signature magnétique du dispositif porté par l'utilisateur (100) par le mouvement du second composant à sensibilité magnétique (105) par rapport au premier composant à sensibilité magnétique (104) ; et
- l'identification (76) du dispositif porté par l'utilisateur (100) par l'identification de la signature magnétique avec une pluralité de magnétomètres (300) d'un dispositif numérique (200) comprenant une surface d'interaction (210) et la pluralité de magnétomètres (300).

11. Procédé mis en œuvre par ordinateur (70) selon la revendication 10, comprenant en outre :
- le changement d'un premier type du dispositif porté par l'utilisateur (100) en un second type du dispositif porté par l'utilisateur (100) par le mouvement du second composant à sensibilité magnétique (105) par rapport au premier composant à sensibilité magnétique (104).

12. Procédé mis en œuvre par ordinateur (70) selon la revendication 10, comprenant en outre :
- la détection d'une position et/ou d'une orientation du dispositif porté par l'utilisateur par la signature magnétique.

13. Procédé mis en œuvre par ordinateur (70) selon la revendication 10 ou 11, comprenant en outre :
la modification d'une caractéristique du dispositif porté par l'utilisateur (100) par le mouvement du second composant à sensibilité magnétique (105) par rapport au premier composant à sensibilité magnétique (104).

14. Élément de programme informatique comprenant des instructions lisibles par machine qui, lorsqu'elles sont exécutées par un circuit de traitement (230), sont conçues pour effectuer le procédé mis en œuvre par ordinateur (70) selon l'une des revendications 10 à 13.
